# EUROPÄISCHE PATENTSCHRIFT

(11) **EP 0 577 233 B1**
(45) Veröffentlichungstag und Bekanntmachung des Hinweises auf die Patenterteilung: **31.01.1996**
(21) Anmeldenummer: 93250136.4
(22) Anmeldetag: 12.05.1993
(51) Int. Cl.: H01B 7/28

(54) **Starkstromkabel mit längswasserdichtem Schirmbereich**
Power cable with longitudinally watertight screen
Cable de puissance avec écran d'étanchéité à l'eau longitudinal

(30) Priorität: 01.07.1992 DE 9208880 U
(43) Veröffentlichungstag der Anmeldung: 05.01.1994
(73) Patentinhaber: SIEMENS AKTIENGESELLSCHAFT, D-80333 München (DE)
(72) Erfinder: Hüttner, Peter, Dipl.-Ing., W-1000 Berlin 13 (DE)

(56) Entgegenhaltungen:
- FR-A- 1 592 259
- FR-A- 2 090 210
- US-A- 3 703 034

## Beschreibung

Die Erfindung befaßt sich mit der konstruktiven Ausgestaltung eines geschirmten, kunststoffisolierten und kunststoffummantelten Starkstromkabels, dessen Schirmbereich gegen die Längsausbreitung von Wasser geschützt ist.

Zur Längsabdichtung von Energiekabeln im Schirmbereich werden sogenannte Quellvliese eingesetzt, die aus einer Trägerschicht mit hoher mechanischer Festigkeit und einer Quellschicht bestehen. Bei nichtleitfähigen Vliesen werden für die Trägerschicht Polyesterfasern und für die Quellschicht eine Mischung aus einem synthetischen Hydrogelbildner und einem Zellulosepulp als Füllmittel verwendet. Bei elektrisch leitfähigen Quellvliesen wird ein mit leitfähigem Ruß imprägnierte Quellschicht verwendet, die als Festigkeitsträger ein Fadengelege enthält. - Die Längsabdichtung von Energiekabeln im Schirmbereich kann mittels solcher Bänder u.a. in der Weise erfolgen, daß unter dem aus vielen Einzeldrähten aufgebauten Schirm eine Bandagierung eines leitfähigen Quellvliesstoffes angeordnet ist, gegebenenfalls in Kombination mit einem Kunststoffinnenmantel (DE-Z "Draht und Kabel Panorama", April/Mai 1987, Seiten 54 bis 56).

Bei Mittel- und Hochspannungskabeln mit vernetzter Isolierung und mit einem die äußere Leitschicht umgebenden Drahtschirm ist es weiterhin erforderlich, zwischen der äußeren Leitschicht und dem Drahtschirm eine Polsterung vorzusehen. Diese kann beispielsweise aus einem Schaumstoff/Vliesstoff-Laminat bestehen, das als Band mit überlappenden Bandkanten auf die Leitschicht aufgewickelt wird. Für den Fall, daß der Schirmbereich längswasserdicht ausgestaltet sein soll, kann als Polster ein reiner, elektrisch leitfähiger Polyestervliesstoff vorgesehen sein, während auf den Schirm ein nicht leitfähiger, quellbarer Vliesstoff aufgebracht ist (DE-Z "Draht", 1982, Heft 4, Seite 203).

Ausgehend von einem Starkstromkabel mit den Merkmalen des Oberbegriffes des Patentanspruches liegt der Erfindung die Aufgabe zugrunde, den Schirmbereich eines Starkstromkabels so auszugestalten, daß die verschiedenen Anforderungen wie Fixierung der Schirmdrähte (insbesondere bei SZ-verseilten Schirmdrähten), gute Polsterung des Schirmes und Längswasserdichtigkeit mit einem einzigen Fertigungsschritt erreichbar sind. Zur Lösung dieser Aufgabe ist gemäß der Erfindung vorgesehen, daß die unter dem Schirm angeordnete Bebänderung aus einem Vliesstoff/Schaumstoff-Laminat mit nach außen liegender Schaumstoffschicht besteht, wobei das durch Feuchtigkeit aktivierbare Quellpulver zwischen den beiden Laminat-Schichten angeordnet ist.

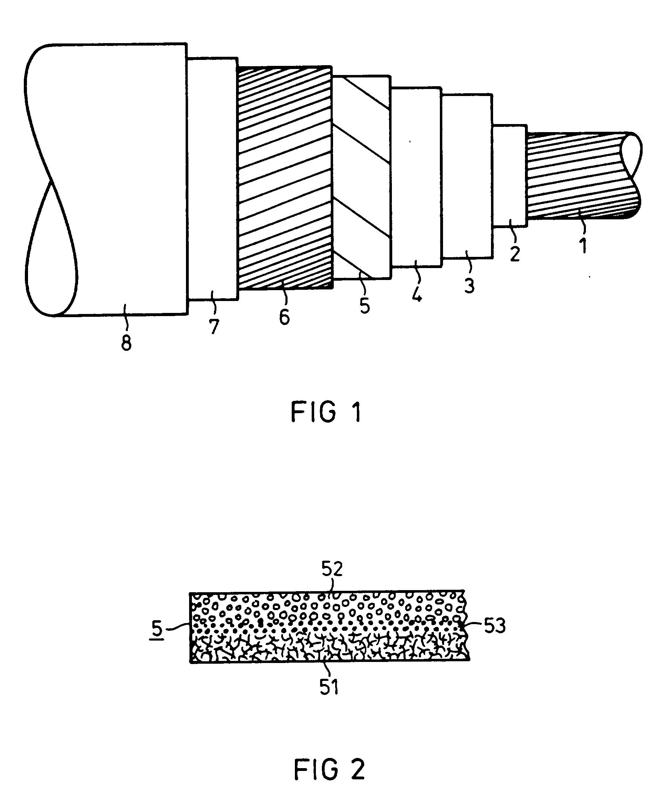

Ein Ausführungsbeispiel des neuen Starkstromkabels ist in den Figuren 1 und 2 dargestellt.

Figur 1 zeigt das Stufenmuster eines Starkstromkabels, das aus dem vieldrähtigen Leiter 1, der extrudierten inneren Leitschicht 2, der extrudierten und vernetzten Isolierschicht 3, der extrudierten äußeren Leitschicht 4, einer Polsterschicht 5, dem aus Einzeldrähten aufgebauten Schirm 6 und dem extrudierten Innenmantel auf Gummi- oder Kunstoffbais 7 sowie dem extrudierten Außenmantel 8 besteht. Dabei können die Schirmdrähte SZ-verseilt sein. Alternativ kann anstelle des Innenmantels 7 eine Metallfolie angeordnet sein, die mit dem Außenmantel zu einem Schichtenmantel vereinigt ist.

Für das Polster 5 ist gemäß Figur 2 ein Band verwendet, das aus einem Laminat einer elektrisch leitfähigen Vliesstoffschicht 51 und einer elektrisch leitfähigen Schaumstoffschicht 52 besteht. Die Poren der Schaumstoffschicht 52 sind offen.

Zwischen den beiden Laminatschichten 51 und 52 ist eine Quellpulverschicht 53 angeordnet, wobei die einzelnen Pulverteilchen im wesentlichen in der Oberflächenschicht der Vliesstoffschicht 51 verankert sind. - Das Band 5 wird bei der Herstellung des Kabels so auf die äußere Leitschicht 4 aufgebracht, daß die Schaumstoffschicht 52 nach außen weist und damit eine Einbettungsschicht für die aufgeseilten Drähte des Schirmes 6 bildet.

## Patentansprüche

1. Starkstromkabel mit einem aus Drähten aufgebauten Schirm, der unterhalb des Außenmantels auf eine extrudierte Leitschicht aufgebracht ist,
wobei zwischen der Leitschicht und den Schirmdrähten eine leit- und quellfähige Bebänderung angeordnet ist,
**dadurch gekennzeichnet,**
daß die Bebänderung (5) aus einem Vliesstoff/Schaumstoff-Laminat (51,52) mit nach außen liegender Schaumstoffschicht besteht, wobei das durch Feuchtigkeit aktivierbare Quellpulver (53) zwischen den beiden Laminatschichten angeordnet ist.

## Claims

1. Power cable having a screen assembled from wires, which is applied beneath the outer casing onto an extruded semi-conducting layer, whereby between the semi-conducting layer and the screen wires a conductive tape lapping which is capable of swelling is arranged, characterized in that the tape lapping (5) consists of a fleece/foam laminate (51, 52) with the foam layer on the outside, whereby the swelling powder (53) which can be activated by moisture is arranged between the two laminate layers.

## Revendications

1. Câble pour courant fort comportant un blindage formé de fils, qui est disposé au-dessous de la gaine extérieure, sur une couche conductrice extrudée,
et dans lequel un rubanage conducteur est susceptible de gonfler est disposé entre la couche conductrice et les fils de blindage,
caractérisé par le fait
que le rubanage (5) est constitué d'un stratifié matériau non tissé/matériau mousse (51,52) comportant une couche extérieure en matériau mousse, la poudre (53) qui est susceptible de gonfler et qui peut être activée par l'humidité, étant disposée entre les deux couches du stratifié.
